# EUROPEAN PATENT APPLICATION

(11) **EP 3 919 268 A1**
(43) Date of publication of application: **08.12.2021**
(21) Application number: 19912710.1
(22) Date of filing: 19.12.2019
(51) Int. Cl.: B32B 5/10, B32B 27/12, B32B 27/32, C08J 5/06, B29C 70/34

(54) **MULTILAYER SHEET AND METHOD FOR PRODUCING MULTILAYER SHEET**

(30) Priority: 29.01.2019 JP 2019013244
(71) Applicant: Hitachi Astemo, Ltd., Hitachinaka-shi Ibaraki 312-8503 (JP)
(72) Inventor: KOBAYASHI, Hirofumi, Hitachinaka-shi, Ibaraki 312-8503 (JP); KOBAYASHI, Hideki, Hitachinaka-shi, Ibaraki 312-8503 (JP)
(74) Representative: Dehns
(86) International application number: PCT/JP2019/049872
(87) International publication number: WO 2020/158233

(57) **Abstract**

The present invention provides: a multilayer sheet which contains a polyolefin resin and carbon fibers, and which is highly competitive in price; and a method for producing this multilayer sheet. A multilayer sheet (100) according to the present invention comprises: a carbon fiber layer (20) which contains a woven fabric of carbon fibers; and polyolefin resin layers (10) which are in contact with the both surfaces of the carbon fiber layer (20). The carbon fiber layer (20) has a porosity of 10.0% or less. A method for producing this multilayer sheet (100) according to the present invention comprises a process of applying a surface treatment agent to the both surfaces of a woven fabric of carbon fibers, a process of superposing polyolefin resin sheets on the both surfaces of the woven fabric to which the surface treatment agent has been applied, and a process of melting the polyolefin resin by applying a pressure onto the laminate of the polyolefin resin sheets and the woven fabric, while heating the laminate, and subsequently cooling the laminate, thereby obtaining a multilayer sheet.

## Description

### Technical Field

The present invention relates to a multilayer sheet containing carbon fibers, and to a method for producing a multilayer sheet.

### Background Art

Carbon fiber reinforced plastic (CFRP) is typically distributed in the form of a thermoset prepreg prepared by impregnating carbon fibers into a thermoset resin such as epoxy. Because of lightness coupled with high strength and high elastic modulus, carbon fiber reinforced plastics are used in a wide variety of technical applications, for example, such as airplanes and automobiles.

A thermoset resin is inferior to thermoplastic resins in terms of productivity, and there is a demand for a carbon fiber reinforced plastic using thermoplastic resin. A carbon fiber reinforced plastic using thermoplastic resin has been proposed (PTL 1) in recent years. The carbon fiber reinforced plastic proposed in this related art uses short carbon fibers having an average fiber length of 0.05 to 3 mm, and is molded with a molding machine such as an injection molding machine or extrusion molding machine.

### Citation List

### Patent Literature

PTL 1: WO2018/088471

### Summary of Invention

### Technical Problem

However, the thermoplastic resin actually used in PTL 1 is a polyamide resin, and, at present, there is no practical application of a carbon fiber reinforced plastic that uses the inexpensive and versatile polyolefin resin. Another issue is that the carbon fiber reinforced plastic disclosed in PTL 1 has low flexural modulus because of the short fibers.

It is accordingly an object of the present invention to provide a multilayer sheet having high flexural modulus despite using the cost competitive polyolefin resin. The present invention is also intended to provide a method for producing such a multilayer sheet.

### Solution to Problem

The present invention has been made to provide a solution to at least a part of the foregoing issues, and can be implemented in the form of the following aspects.
[1] An aspect of a multilayer sheet according to the present invention includes:
   a carbon fiber layer containing a woven fabric of carbon fibers; and
   polyolefin resin layers in contact with both surfaces of the carbon fiber layer,
   the carbon fiber layer having a porosity of 10.0% or less.
[2] The aspect of a multilayer sheet of the present invention may be such that the carbon fiber layer has a portion with a polyolefin resin filling between adjacent carbon fibers.
[3] The aspect of a multilayer sheet of the present invention may be such that the polyolefin resin layers are configured from high-density polyethylene.
[4] The aspect of a multilayer sheet of the present invention may be such that the polyolefin resin layers are configured from polypropylene.
[5] The aspect of a multilayer sheet of the present invention may be such that:
   the carbon fibers in the carbon fiber layer have a fiber diameter of 7 µm to 10 µm,
   the carbon fibers in the carbon fiber layer of the multilayer sheet have a fiber volume fraction of 50% or more, and
   the multilayer sheet has a flexural modulus of 50 GPa or more as measured in compliance with JIS K7074.
[6] The aspect of a multilayer sheet of the present invention may be such that:
   the carbon fibers in the carbon fiber layer have a fiber diameter of 7 µm to 10 µm,
   the carbon fibers in the carbon fiber layer of the multilayer sheet have a fiber volume fraction of 18% or more, and
   the multilayer sheet has a flexural modulus of 20 GPa or more as measured by a tangential three-point flexure test conducted at 23°C for a 50 mm × 10 mm × 1 mm (thickness) test piece obtained by cutting the multilayer sheet.
[7] An aspect of a method for producing a multilayer sheet according to the present invention includes:
   applying a surface treatment agent to both surfaces of a woven fabric of carbon fibers;
   superposing polyolefin resin sheets on the both surfaces of the woven fabric after the application of the surface treatment agent; and
   pressurizing a laminate of the polyolefin resin sheets and the woven fabric under applied heat to melt the polyolefin resin, and cooling the laminate to obtain a multilayer sheet.
[8] The aspect of a method for producing a multilayer sheet according to the present invention may be such that the polyolefin resin sheets are configured from high-density polyethylene.
[9] The aspect of a method for producing a multilayer sheet according to the present invention may be such that the polyolefin resin sheets are configured from high-density polypropylene.

### Advantageous Effects of Invention

According to the present invention, a carbon fiber reinforced plastic multilayer sheet can be provided that has high cost competitiveness because of the inexpensive and versatile polyolefin resin used for the multilayer sheet, and that has a desirable flexural modulus because of low porosity. The present invention can also provide a method for producing a carbon fiber reinforced plastic multilayer sheet having high cost competitiveness and a desirable flexural modulus.

### Brief Description of Drawings

[Fig. 1] Fig. 1 is a side view of a multilayer sheet according to an embodiment.
[Fig. 2] Fig. 2 is a diagram explaining a porosity measurement method.
[Fig. 3] Fig. 3 is a schematic view explaining a multilayer sheet producing method according to an embodiment.
[Fig. 4] Fig. 4 shows an electron micrograph of a multilayer sheet of Example 1.

### Description of Embodiments

Preferred embodiments of the present invention are described below in detail, with reference to the accompanying drawings. It is to be noted that the embodiments described below are not intended to unduly limit the substance of the present invention set forth in the claims. It should also be noted that all components described below do not necessarily represent the essential components of the present invention.

### 1. Multilayer Sheet

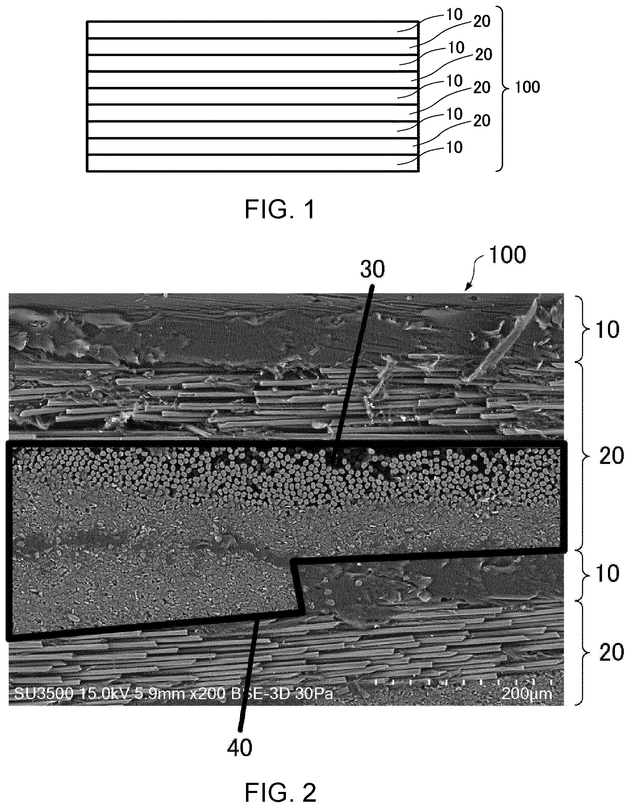

A multilayer sheet 100 according to an embodiment is described below, with reference to Fig. 1. Fig. 1 shows a side view of the multilayer sheet 100 according to an embodiment.

As shown in Fig. 1, the multilayer sheet 100 includes carbon fiber layers 20 containing a woven fabric of carbon fibers, and polyolefin resin layers 10 in contact with both surfaces of the carbon fiber layers 20. The multilayer sheet 100 is constructed by alternately superposing the carbon fiber layer 20 and the polyolefin resin layer 10 in layers. The multilayer sheet 100 includes a plurality of the polyolefin resin layers 10, and the number of the carbon fiber layers 20 is one less than the number of the polyolefin resin layers 10. In Fig. 1, the carbon fiber layers 20 and the polyolefin resin layers 10 are a total of nine layers; however, the number of layers is not limited to this. The number of the polyolefin resin layers 10 and the carbon fiber layers 20 can be set according to the strength and flexural modulus required for the product. The layers on the both sides of the multilayer sheet 100 are polyolefin resin layers 10. The multilayer sheet 100 is a carbon fiber reinforced plastic using the inexpensive and versatile polyolefin resin, and has high cost competitiveness.

The carbon fiber layer 20 contains a woven fabric of carbon fibers. The carbon fiber layer 20 can have portions with a polyolefin resin filling between adjacent carbon fibers. Such portions are present in the vicinity of the boundaries with the polyolefin resin layers 10 in the carbon fiber layer. The carbon fiber layer 20 becomes less porous as the polyolefin resin filling between adjacent carbon fibers of these portions increases.

The carbon fibers in the carbon fiber layer 20 may have a fiber diameter of 7 µm to 10 µm. The carbon fibers may be, for example, polyacrylonitrile (PAN)- or pitch-based carbon fibers. However, the carbon fibers are preferably PAN-based carbon fibers, which more favorably produce stronger yarns. The carbon fiber layer 20 contains carbon fibers in the form of a woven fabric. The carbon fibers may be a plain weave fabric or a twill weave fabric. Preferably, the carbon fibers are a twill weave fabric. The carbon fiber layer 20 may have a thickness of 0.11 mm to 0.61 mm.

The polyolefin resin layers 10 are disposed so as to sandwich the carbon fiber layers 20. Two polyolefin resin layers 10 contact the both surfaces of a carbon fiber layer 20. As will be clearly understood in the descriptions of the production method below, the polyolefin resin in the polyolefin resin layers 10 partially melts into the woven fabric of carbon fibers, and fills the space between adjacent carbon fibers. Accordingly, the boundary between the polyolefin resin layer 10 and the carbon fiber layer 20 becomes clearer when the polyolefin resin layer 10 is defined as a region configured solely from polyolefin resin. That is, the polyolefin resin filling the woven fabric of carbon fiber is excluded from the polyolefin resin layer 10.

The polyolefin resin layer 10 may be configured from high-density polyethylene. High-density polyethylene has desirable chemical resistance, aside from being inexpensive and versatile. The high-density polyethylene used for the polyolefin resin layer 10 may be a common high-density polyethylene available in the market. As used herein, high-density polyethylene is one having a density of 0.942 g/cm³ or more, preferably 0.942 g/cm³ or more and less than 0.965 g/cm³, and that is obtained by polymerizing ethylene using a low-pressure polymerization method (vapor-phase polymerization using a Ziegler-Natta catalyst, or liquid-phase polymerization using a metallocene catalyst). Here, the value of polyethylene density is a measured value according to the method specified in method A of JIS K7112-1980 after annealing performed in accordance with JIS K6760-1995.

The polyolefin resin layer may be configured from polypropylene. Polypropylene has desirable heat resistance, aside from being inexpensive and versatile.

The carbon fiber layers in the multilayer sheet 100 have a porosity of 10.0% or less. Previous studies by the present inventors have revealed that the flexural modulus increases with decrease of porosity. The porosity of carbon fiber layers in the multilayer sheet 100 is more preferably 8.0% or less, even more preferably 5.0% or less. With a porosity of 10.0% or less, high flexural modulus can be obtained even for multilayer sheets using polyolefin resin.

A porosity measurement method is described below, with reference to Fig. 2. Fig. 2 is a diagram explaining a porosity measurement method. Fig. 2 shows a multilayer sheet having a porosity of 16%, in order to more clearly describe porosity. Fig. 2 represents a cross section cut through layers of the multilayer sheet, showing polyolefin resin layers 10 overlying and underlying a carbon fiber layer 20. Many circular cross sections seen in the cross section of the carbon fiber layer 20 are cross sections of carbon fibers running orthogonal to the plane of the cross section. Here, porosity represents a proportion of the sum of the areas of all pores 30 present in a region 40, expressed as a percentage relative to the area of the region 40 containing carbon fibers seen as circular cross sections in the electron microscope image. The region 40 is an area with carbon fibers that are orthogonal to the plane of the cross section, and excludes portions of carbon fibers oriented substantially parallel to the plane of the cross section. It is to be noted that the portion of polyolefin resin layer 10 seen as being present in the region 40 is excluded from the area of region 40.

When the carbon fibers in the carbon fiber layers 20 have a fiber volume fraction (Vf) of 50% or more and a fiber diameter of 7 µm to 10 µm, the multilayer sheet 100 can have a flexural modulus of 50 GPa or more as measured in compliance with JIS K7074. The fiber volume fraction (Vf) of carbon fibers is calculated as a volume fraction of the woven fabric of carbon fibers relative to the as-prepared volume (a total volume of high-density polyethylene sheets and a woven fabric of carbon fibers). The carbon fibers in the multilayer sheet 100 have a fiber volume fraction (Vf) of preferably 63% or more. The multilayer sheet 100 can have a flexural modulus of 50 GPa to 70 GPa, or even 54 GPa to 70 GPa.

When the carbon fibers in the carbon fiber layers 20 have a fiber volume fraction (Vf) of 18% or more and a fiber diameter of 7 µm to 10 µm, the multilayer sheet 100 can have a flexural modulus of 20 GPa or more as measured by a tangential three-point flexure test conducted at 23°C for a 50 mm × 10 mm × 1 mm (thickness) test piece obtained by cutting the multilayer sheet 100. The carbon fibers in the multilayer sheet 100 may have a fiber volume fraction (Vf) of 18% to 32%. The multilayer sheet 100 can have a flexural modulus of 20 GPa to 40 GPa.

### 2. Method of Production of Multilayer Sheet

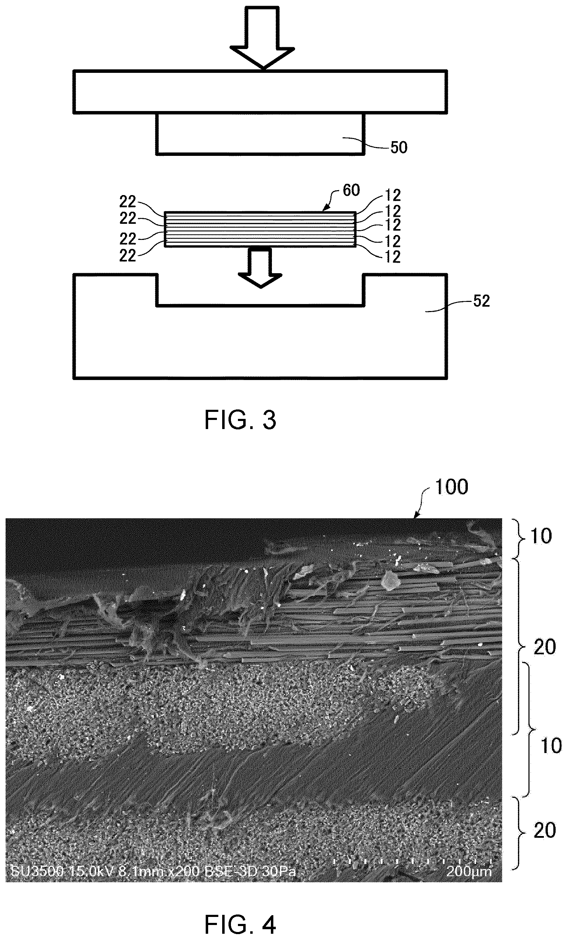

A method for producing a multilayer sheet according to an embodiment is described below, with reference to Fig.3. Fig. 3 is a schematic view explaining a multilayer sheet producing method according to an embodiment.

As shown in Fig. 3, a method for producing a multilayer sheet according to an embodiment includes the steps of: applying a surface treatment agent to both surfaces of a woven fabric 22 of carbon fibers; superposing polyolefin resin sheets 12 on the both surfaces of the woven fabric 22 after the application of the surface treatment agent; and molding a laminate 60 of the polyolefin resin sheets 12 and the woven fabric 22 by applying pressure under applied heat to melt the polyolefin resin, and cooling the laminate 60 to obtain a multilayer sheet. By using the inexpensive and versatile polyolefin resin, the multilayer sheet producing method enables production of a carbon fiber reinforced plastic having high cost competitiveness.

The woven fabric 22 of carbon fibers used in the application step may be a plain weave fabric or twill weave fabric of multiple carbon fibers. Preferably, the woven fabric 22 is a twill weave fabric. The carbon fibers in the woven fabric 22 may have a fiber diameter of 7 µm to 10 µm. The woven fabric 22 may have a thickness of 0.11 mm to 0. 61 mm.

In the application step, a surface treatment agent is applied to surfaces of the woven fabric 22. The surface treatment agent may be applied by, for example, spraying.

The surface treatment agent may be one having high affinity for carbon fibers and polyolefin resin. The surface treatment agent may contain compounds such as surfactants, silicones, silane coupling agents, and metallic coupling agents. The surface treatment agent may be used alone, or two or more surface treatment agents may be used in combination as appropriate.

The surfactant may be, for example, an anionic surfactant, a cationic surfactant, a nonionic surfactant, an ampholytic surfactant, or a polymeric surfactant. Examples of the anionic surfactant include sodium laurate, sodium stearate, sodium 1-decanesulfonate, sodium 1-dodecanesulfonate, sodium lauryl sulfate, and sodium lauryl phosphate. Examples of the cationic surfactant include tetramethylammonium chloride, decyltrimethylammonium chloride, didecyldimethylammonium chloride, monomethylamine hydrochloride, dimethylamine hydrochloride, and trimethylamine hydrochloride. Examples of the nonionic surfactant include glyceryl laurate, glyceryl monostearate, pentaethylene glycol monododecyl ether, octaethylene glycol monododecyl ether, lauric diethanolamide, oleic diethanolamide, and stearic diethanolamide. Examples of the ampholytic surfactant include betaine lauryl dimethyl aminoacetate, betaine stearyl dimethyl aminoacetate, dodecyl aminomethyl dimethyl sulfopropyl betaine, sodium lauroyl glutamate, and lauryldimethylamine N-oxide. Examples of the polymeric surfactant include anionic polymeric surfactants such as a (meth)acrylic acid copolymer, a maleic acid copolymer, carboxymethyl cellulose (CMC), carboxy methyl starch (CMS), (meth)acrylic acid-grafted starch, sodium alginate, sodium pectinate, and xanthan gum; cationic polymeric surfactants such as a vinylpyridine copolymer, polyvinylpyrrolidone, polyethyleneimine, cationic starch, and chitosan; and non-ionic polymeric surfactants such as polyoxyethylene-polyoxypropylene, polyvinyl alcohol (PVA), polyvinyl ether, polyacrylamide, an ethylene oxide adduct of an alkylphenol formaldehyde condensation product, methyl cellulose (MC), ethyl cellulose (EC), hydroxyethyl cellulose (HEC), corn starch, and various types of starches. The polymeric surfactant is a macromolecule with a weight-average molecular weight of 1,000 or more, preferably 5,000 or more, more preferably 10,000 or more.

Examples of the silicones include low-viscosity dimethylpolysiloxane, high-viscosity dimethylpolysiloxane, cyclic dimethylsiloxane, methylphenylpolysiloxane, diphenylpolysiloxane, amino-modified silicone, epoxy-modified silicone, cation-modified polysiloxane, polyether-modified polysiloxane, polyglycerin-modified polysiloxane, sugar-modified polysiloxane, alkyl-modified polysiloxane, fatty acid-modified polysiloxane, and fluorine-modified polysiloxane.

Examples of the silane coupling agents include compounds such as 3-glycidoxypropyltriethoxysilane, N-2-(aminoethyl)-3-aminopropylmethyldimethoxysilane, N-2-(aminoethyl)-3-aminopropyltrimethoxysilane, N-2-(aminoethyl)-3-aminopropyltriethoxysilane, 3-aminopropyltrimethoxysilane, 3-aminopropyltriethoxysilane, 3-ureidopropyltriethoxysilane, 3-mercaptopropylmethyldimethoxysilane, 3-mercaptopropyltrimethoxysilane, and bis(triethoxysilylpropyl)tetrasulfide.

Examples of the metallic coupling agents include titanate coupling agents such as isopropyl triisostearoyl titanate, isopropyl tridodecylbenzenesulfonyl titanate, isopropyl tris(dioctylpyrophosphate)titanate, tetraisopropyl bis(dioctylphosphite)titanate, tetraoctyl bis(ditridecylphosphite)titanate, tetra(2,2-diallyloxymethyl-1-butyl)bis(ditridecyl)phosphite titanate, bis(dioctylpyrophosphate)oxyacetate titanate, bis(dioctylpyrophosphate)ethylene titanate, isopropyl trioctanoyl titanate, isopropyl dimethacryl isostearoyl titanate, isopropyl isostearoyl diacryl titanate, isopropyl tri(dioctylphosphate)titanate, isopropyl tri(N-amidoethylaminoethyl)titanate, dicumylphenyloxyacetate titanate, and diisostearoyl ethylene titanate; and aluminum coupling agents such as acetoalkoxy aluminum diisopropylate.

In the superposing step, the woven fabric 22 after the application of the surface treatment agent, and the polyolefin resin sheet 12 are alternately overlaid to obtain the laminate 60 in which the polyolefin resin sheets 12 are disposed on both surfaces of the woven fabric 22. The laminate 60 has polyolefin resin sheets 12 at its top and bottom surfaces. Preferably, the woven fabrics 22 of carbon fibers on the both sides of the polyolefin resin sheet 12 are disposed in such an orientation that the warps in the adjacent woven fabrics 22 are orthogonal to each other. This is to prevent orientation-related decrease of flexural modulus in the multilayer sheet.

The polyolefin resin sheet 12 may have a thickness of, for example, 0.04 mm to 1.00 mm. Preferably, the polyolefin resin sheet 12 has a thickness of 0.05 mm to 0.25 mm. When the thickness of polyolefin resin sheet 12 is less than 0.04 mm, the woven fabrics 22 cannot be joined to each other in the molding step. The polyolefin resin sheet 12 may be configured from high-density polyethylene, or may be configured from polypropylene.

In the molding step, the laminate 60 of polyolefin resin sheets 12 and woven fabrics 22 is placed between an upper mold 50 and a lower mold 52, and the laminate 60 is pressurized between the upper mold 50 and the lower mold 52 under applied heat. The applied heat melts the polyolefin resin sheets 12 in the laminate 60, and the polyolefin resin that has melted in the laminate 60 partially infiltrates the woven fabrics 22, and fills the space between carbon fibers. The multilayer sheet can then be obtained by cooling the upper mold 50 and lower mold 52 to, for example, room temperature. The heating temperature in the molding step is at or above the temperature that melts the polyolefin resin sheets 12.

The molding step may have a compression rate of 50% to 75% across the layers. Here, compression rate is a percentage of the thickness of the multilayer sheet after the molding step relative to the thickness of the laminate 60 used in the molding step.

The multilayer sheet produced in the manner described above has low porosity in the carbon fiber layers, and the flexural modulus is desirable.

While the present invention has been described in detail with reference to certain embodiments of the invention, it will be apparent to a skilled person that various modifications may be made thereto without substantively departing from the novel features and advantages of the invention. It is intended that all such modifications fall within the scope of the present invention.

### Examples

### Methods of Evaluation and Measurement

### (1) Porosity

For porosity measurement, a multilayer sheet sample prepared was cut at right angle to the warp or weft of carbon fibers in the woven fabric, and the cross section was imaged with an electron microscope. The porosity was then measured according to the measurement method described above. Specifically, the porosity was determined as a percentage of the area of spaces with no resin in the area of a region containing numerous carbon fibers seen as circular cross sections in an electron microscope image.

### (2) Flexural Modulus

Flexural modulus was measured using two methods, A and B. In method A, a prepared multilayer sheet sample measuring 50 mm × 50 mm × 1 mm (thickness) was cut into a 50 mm × 10 mm × 1 mm (thickness) test piece, and the flexural modulus was measured by conducting a tangential three-point flexure test at 23°C using an Autograph (manufactured by Shimadzu Corporation). Measurements were made with a span length of 30 mm, a bending rate of 5 mm/min, a tip radius of 5 mm for the indenter, and a tip radius of 2 mm for the support. In method B, a prepared multilayer sheet sample was cut into a 100 mm × 15 mm × 2 mm (thickness) test piece, and the flexural modulus was measured by conducting a tangential three-point flexure test at 23°C according to JIS K7074, using an Autograph (manufactured by Shimadzu Corporation). Measurements were made with a span length of 80 mm, a bending rate of 5 mm/min, a tip radius of 5 mm for the indenter, and a tip radius of 2 mm for the support.

### [Example 1]

A surfactant as a surface treatment agent was applied to both surfaces of a woven fabric of carbon fibers (hereinafter, "CF cloth"). A laminate prepared by alternately superposing four CF cloths and five high-density polyethylene sheets (hereinafter, "PE film") was placed in the mold of a press machine, and was pressurized at 53% compression rate to mold a multilayer sheet sample of Example 1. The carbon fibers in the multilayer sheet had a fiber volume fraction (Vf) of 31%. The sample size was 5 mm × 5 mm × 1 mm (thickness). The flexural modulus was measured using method A.

For compression molding, a pressure of 70 kgf/cm² to 80 kgf/cm² was applied for 1 minute with the mold temperature set to 250°C to 270°C. A twill weave cloth C06347B (TORAYCA^{®}, 0.22 mm thick, manufactured by Toray Industries, Inc.) was used as CF cloth. A commercially available HDPE film, 0.2 mm thick, was used as PE film.

The sample of Example 1 had a porosity of 4.1%, and a flexural modulus of 30.4 GPa.

### [Comparative Example 1]

A multilayer sheet sample was obtained in the same manner as in Example 1, except that a surface treatment agent was not applied to the CF cloth. The sample of Comparative Example 1 had a porosity of 16.0%, and a flexural modulus of 17.1 GPa.

### [Example 2]

A surfactant as a surface treatment agent was applied to both surfaces of a CF cloth. A laminate prepared by alternately superposing eleven CF cloths and twelve PE films was placed in the mold of a press machine, and was pressurized at 64% compression rate to mold a multilayer sheet sample of Example 2. The carbon fibers in the multilayer sheet had a fiber volume fraction (Vf) of 63%. The sample size is 310 mm × 310 mm × 2 mm (thickness).

For compression molding, a pressure of 45 kgf/cm² to 65 kgf/cm² was applied for 10 minutes with the mold temperature set to 250°C to 270°C. A twill weave cloth C06347B (TORAYCA^{®}, 0.22 mm thick, manufactured by Toray Industries, Inc.) was used as CF cloth. A commercially available HDPE film, 0.06 mm thick, was used as PE film.

The sample of Example 2 had a porosity of 4.0%, and a flexural modulus of 54.1 GPa to 54.4 GPa. The flexural modulus was measured using method B.

Assuming that porosity and flexural modulus have a linear relationship in Example 1 and Comparative Example 1, the flexural modulus of the multilayer sheet of Example 2 can be estimated to be 50 GPa at around 8.0% porosity by applying this slope to Example 2.

Assuming that fiber volume fraction (Vf) and flexural modulus have a linear relationship in Example 1 and Example 2, the flexural modulus can be estimated to be 50 GPa at around 57% fiber volume fraction (Vf).

### Reference Signs List

- 10:: polyolefin resin layer
- 12:: polyolefin resin sheet
- 20:: carbon fiber layer
- 22:: woven fabric
- 30:: pore
- 40:: region
- 50:: upper mold
- 52:: lower mold
- 60:: laminate
- 100:: multilayer sheet

## Claims

1. A multilayer sheet comprising:
a carbon fiber layer containing a woven fabric of carbon fibers; and
polyolefin resin layers in contact with both surfaces of the carbon fiber layer,
the carbon fiber layer having a porosity of 10.0% or less.

2. The multilayer sheet according to claim 1, wherein the carbon fiber layer has a portion with a polyolefin resin filling between adjacent carbon fibers.

3. The multilayer sheet according to claim 1 or 2, wherein the polyolefin resin layers are configured from high-density polyethylene.

4. The multilayer sheet according to claim 1 or 2, wherein the polyolefin resin layers are configured from polypropylene.

5. The multilayer sheet according to any one of claims 1 to 4, wherein:
the carbon fibers in the carbon fiber layer have a fiber diameter of 7 µm to 10 µm,
the carbon fibers in the carbon fiber layer of the multilayer sheet have a fiber volume fraction of 50% or more, and
the multilayer sheet has a flexural modulus of 50 GPa or more as measured in compliance with JIS K7074.

6. The multilayer sheet according to any one of claims 1 to 4, wherein:
the carbon fibers in the carbon fiber layer have a fiber diameter of 7 µm to 10 µm,
the carbon fibers in the carbon fiber layer of the multilayer sheet have a fiber volume fraction of 18% or more, and
the multilayer sheet has a flexural modulus of 20 GPa or more as measured by a tangential three-point flexure test conducted at 23°C for a 50 mm × 10 mm × 1 mm (thickness) test piece obtained by cutting the multilayer sheet.

7. A method for producing a multilayer sheet, comprising:
applying a surface treatment agent to both surfaces of a woven fabric of carbon fibers;
superposing polyolefin resin sheets on the both surfaces of the woven fabric after the application of the surface treatment agent; and
pressurizing a laminate of the polyolefin resin sheets and the woven fabric under applied heat to melt the polyolefin resin, and cooling the laminate to obtain a multilayer sheet.

8. The method for producing a multilayer sheet according to claim 7, wherein the polyolefin resin sheets are configured from high-density polyethylene.

9. The method for producing a multilayer sheet according to claim 7, wherein the polyolefin resin sheets are configured from high-density polypropylene.
